# EUROPEAN PATENT APPLICATION

(11) **EP 2 851 791 A2**
(43) Date of publication of application: **25.03.2015**
(21) Application number: 14002912.5
(22) Date of filing: 22.08.2014
(51) Int. Cl.: G06F 9/44, G06F 17/28

(54) **Mobile terminal**

(30) Priority: 02.09.2013 KR 20130105046
(71) Applicant: LG Electronics, Inc., Seoul 150-721 (KR)
(72) Inventor: Jeong, Seungmin, 137-893 Seoul (KR); Jang, Heungjin, 137-893 Seoul (KR); Kim, Sewon, 137-893 Seoul (KR)
(74) Representative: Beyer, Andreas

(57) **Abstract**

Provided is a mobile terminal including: a display unit to which visual information is output; an input unit into which a text or a voice is input in a first language; and a controller that outputs to the display unit information relating to contents that are input in the first language and executes at least one among first control and second control in association with output of the information, wherein the first control includes control that outputs the information in the first language to the display unit, in which the second control includes control that converts the information into a second language different from the first language and outputs the information in the second language to the display unit.

## Description

### BACKGROUND OF THE DISCLOSURE

### 1. Field of the Disclosure

The present disclosure relates to a mobile terminal that is capable of automatically converting a word being input, into another language.

### 2. Background of the Disclosure

A terminal is broadly categorized by mobility into a mobile terminal and a stationary terminal. The mobile terminal is further categorized by portability into a hand-held terminal and a vehicle-mounted terminal.

In response to an increasing demand for diversified functions, the terminals have been realized in the form of a multimedia player with multiple functions such as photographing a photographic subject as a still image or a moving image, reproducing digital audio and video compression files, playing a game, receiving a broadcast or the like. Furthermore, structural and software modifications to the terminal are considered for supporting and improving functions of the terminal.

Particularly, with developments in wireless communication, there is a growing trend for the user of the mobile terminal to frequently communicate with foreigners, as well as with local citizens, using the mobile terminal. However, many of the users have difficulty in communicating with the foreigners in a foreign language due to a language barrier.

The inconvenience due to the language barrier does not occur only in communicating with the foreigners. The language barrier occurs also in conducting an information search in a Web site that is built based on a different language from a mother language of the user. This imposes a limitation on the use of the Web site and thus on an amount of information that is obtained from the Web site.

In the related art, in some cases, the user of the mobile terminal first translates a text to be input into his/her mother language using a translation program, and then uses the result of the translation in communication with the foreigner or in conduction the information search. However, in the related art, it is necessary to execute the translation program at least one time. Thus, an input word and contents are difficult to convert in a quick, intuitive manner. In this respect, a limitation of the translation program is that it cannot be used widely in various applications that run on the mobile terminal.

Accordingly, an environment where the language barrier is overcome in terms of a software aspect of the mobile terminal is considered in order for the user to communicate without inconvenience with a user who uses the foreign language or to obtain a sufficient amount of information from the Web site that is built based on the different language from a mother language of the user.

### SUMMARY OF THE DISCLOSURE

Therefore, an aspect of the detailed description is to provide a mobile terminal that improves user convenience.

Another aspect of the detailed description is to provide a mobile terminal that enables a user of the mobile terminal to communicate with a user of a different mobile terminal who uses a different language without inconvenience or to obtain an sufficient amount of information from a Web site that is built based on a different language from a mother language of the user.

To achieve these and other advantages and in accordance with the purpose of this specification, as embodied and broadly described herein, there is provide a mobile terminal including: a display unit to which visual information is output; an input unit into which a text or a voice is input in a first language; and a controller that outputs to the display unit information relating to contents that are input in the first language and executes at least one among first control and second control in association with output of the information, in which the first control includes control that outputs the information in the first language to the display unit, and the second control includes control that converts the information into a second language different from the first language and outputs the information in the second language to the display unit.

In the mobile terminal according, the first control may be set to be executed by default and is executed, and the second control may be selected with a touch input and is executed along with the first control or independently.

In the mobile terminal, when the second control is selected with the touch input, a selection window may be output to the display unit in such a way that the selection window from which to select which of a text input and a voice input is set to a first-language selection manner.

In the mobile terminal, when the touch input is applied to the selection window, one among a text input window and a voice input window may be output to the display unit.

In the mobile terminal, the information relating to the contents that are input in the first language may be converted into the second language in accordance with a predetermined condition and may be output to the display unit.

In the mobile terminal, if the number of the second languages in accordance with the predetermined condition is 2 or greater, a screen from which to select one among the multiple languages may be output.

In the mobile terminal, when the second control is executed, the information may be output in a language in which the text is output to the display unit or in a language in which the voice is output from an audio output module.

In the mobile terminal, if wireless communication with the other party of which contact information is stored in an address book in the mobile terminal is performed, the controller may set a language in which the text or the voice is received from the other party, to the second language.

In the mobile terminal, if wireless communication with the other party of which contact information is stored in an address book in the mobile terminal is performed, the controller may select a language suitable for the other party and sets the selected language to the second language.

In the mobile terminal, a language selection window from which to select the second language may be output to the display unit, based on a touch input, and the information may be output in a language that is selected with the touch input that is applied to the language selection window.

In the mobile terminal, the number of the second languages that are output to the language selection window may be determined depending on the frequency with which a language is used in the mobile terminal.

In the mobile terminal, when despite selecting execution of the second control, the information is output in the first language to the display unit, the second language may be set based on the text that is additionally to the display unit or on the voice that is output from the audio output module.

In the mobile terminal, a search word may be input in the first language into the input unit on a screen of a Web browser, and when a control command that with the search word, conducts an information search in the Web browser is input, a result of the searching may be output in the second language to the display unit.

In the mobile terminal, when the second control is executed, the result of the search may be output in a language in which the text or the voice associated with the screen of the Web browser is output.

In the mobile terminal, a result of the search in the first language and a result of the search in the second language may be output to the different screens of the Web browser, respectively.

In the mobile terminal, when a touch input is applied to one among the result of the search in the first language and the result of the searching in the second language, the touched-on result of the search may be enlarged and is output.

In the mobile terminal, the result of the search in the second language may be converted back into the first language and is output to the display unit.

The mobile terminal may further include a location information module that is configured in a manner that obtains locational information on the mobile terminal, and the information may be output in a language that is used in a region associated with the locational information which is obtained in the location information module.

In the mobile terminal, at least one set of contents, among a set of contents that are input in the first language, and a set of contents associated with results of a search in the first language and the second language, respectively, in a Web browser, may be output to the display unit.

In the mobile terminal, when a touch input is applied to the contents associated with the result of the search, the touched-on contents may be link-connected to a Web site associated with the touched-on contents.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the spirit and scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
- FIG. 1: is a block diagram of a mobile terminal according to one embodiment of the present invention;
- FIGS. 2A and 2B: are diagrams, each illustrating a telecommunication system in which the mobile terminal according to the present invention operates;
- FIG. 3A: is a perspective diagram illustrating the mobile terminal according to one embodiment of the present invention when viewed from front;
- FIG. 3B: is a perspective diagram of the mobile terminal illustrated in FIG. 3A when viewed from rear;
- FIG, 4: is a diagram illustrating an operation of the mobile terminal according to the present invention;
- FIGS. 5A to 5D: are diagrams for describing message transmission and reception that is realized in the mobile terminal according to an embodiment of the present invention;
- FIGS. 6A to 6D: are diagrams for describing the message transmission and reception that is realized in the mobile terminal according to an embodiment of the present invention;
- FIGS. 7A to 7C: are diagrams for describing the message transmission and reception that is realized in the mobile terminal according to an embodiment of the present invention;
- FIGS. 8A to 8C: are diagrams for describing the message transmission and reception that is realized in the mobile terminal according to an embodiment of the present invention;
- FIGS. 9A to 9D: are diagrams for describing the message transmission and reception that is realized in the mobile terminal according to an embodiment of the present invention;
- FIGS. 10A to 10C: are diagrams for describing a search in a Web browser that is realized in the mobile terminal according to an embodiment of the present invention;
- FIGS. 11A to 11C: are diagrams for describing a search in the Web browser that is realized in the mobile terminal according to an embodiment of the present invention;
- FIGS. 12A to 12C: are diagrams for describing locational information that is realized in the mobile terminal according to an embodiment of the present invention;
- FIGS. 13A to 13C: are diagrams for describing the locational information that is realized in the mobile terminal according to an embodiment of the present invention; and
- FIGS. 14A to 14D: are diagrams for describing the search that is realized according to an embodiment of the present invention.

### DETAILED DESCRIPTION OF THE DISCLOSURE

Description will now be given in detail according to the exemplary embodiments, with reference to the accompanying drawings. For the sake of brief description with reference to the drawings, the same or equivalent components will be provided with the same reference numbers, and description thereof will not be repeated. A suffix "module" or "unit" used for constituent elements disclosed in the following description is merely intended for easy description of the specification, and the suffix itself does not give any special meaning or function. In describing the present invention, if a detailed explanation for a related known function or construction is considered to unnecessarily divert the gist of the present disclosure, such explanation has been omitted but would be understood by those skilled in the art. The accompanying drawings are used to help easily understood the technical idea of the present invention and it should be understood that the idea of the present disclosure is not limited by the accompanying drawings.

Mobile terminals described herein may include cellular phones, smart phones, laptop computers, digital broadcasting terminals, personal digital assistants (PDAs), portable multimedia players (PMPs), navigators, slate PCs, tablet PC, ultra books and the like. However, it may be easily understood by those skilled in the art that the configuration according to the exemplary embodiments of this specification can be applied to stationary terminals such as digital TV, desktop computers and the like excluding a case of being applicable only to the mobile terminals.

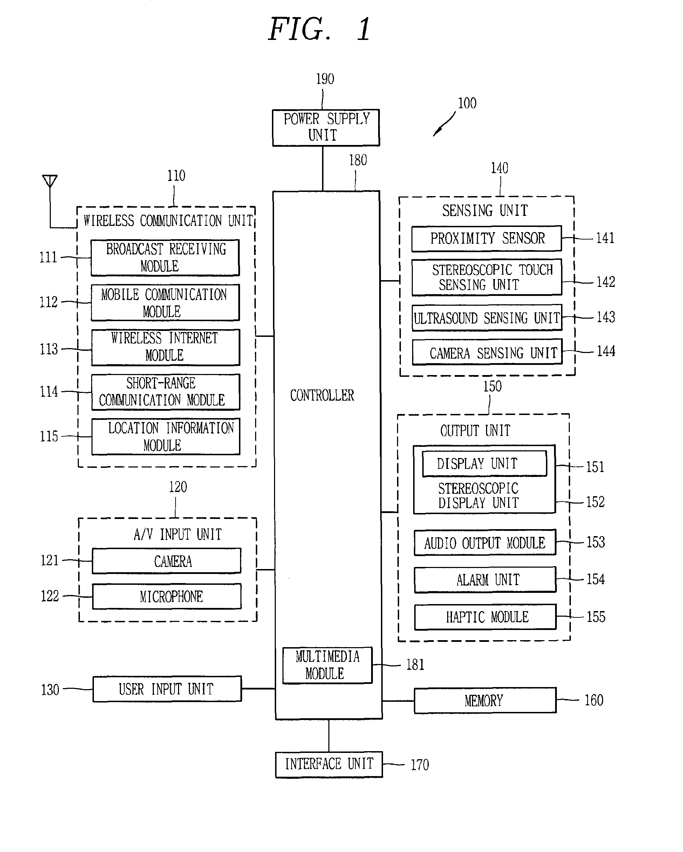

FIG. 1 is a block diagram of a mobile terminal 100 in accordance with one exemplary embodiment.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply 190 and the like. FIG. 1 shows the mobile terminal 100 having various components, but it is understood that implementing all of the illustrated components is not a requirement. Greater or fewer components may alternatively be implemented.

Hereinafter, each component 110 to 190 is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include at least one of a broadcast receiving module 111, a mobile communication module 112, a wireless Internet module 113, a short-range communication module 114, a location information module 115 and the like.

The broadcast receiving module 111 receives a broadcast signal and/or broadcast associated information from an external broadcast managing entity via a broadcast channel.

The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits/receives wireless signals to/from at least one of network entities (e.g., base station, an external mobile terminal, a server, etc.) on a mobile communication network. Here, the wireless signals may include audio call signal, video (telephony) call signal, or various formats of data according to transmission/reception of text/multimedia messages.

The mobile communication module 112 may implement a video call mode and a voice call mode. The video call mode indicates a state of calling with watching a callee's image. The voice call mode indicates a state of calling without watching the callee's image. The wireless communication module 112 may transmit and receive at least one of voice and image in order to implement the video call mode and the voice call mode.

The wireless Internet module 113 supports wireless Internet access for the mobile terminal. This module may be internally or externally coupled to the mobile terminal 100. Examples of such wireless Internet access may include Wireless LAN (WLAN) (Wi-Fi), Wireless Broadband (Wibro), Worldwide Interoperability for Microwave Access (Wimax), High Speed Downlink Packet Access (HSDPA) and the like.

The short-range communication module 114 denotes a module for short-range communications. Suitable technologies for implementing this module may include BLUETOOTH™, Radio Frequency IDentification (RFID), Infrared Data Association (IrDA), Ultra-WideBand (UWB), ZigBee™, Near Field Communication (NFC) and the like.

The location information module 115 denotes a module for detecting or calculating a position of a mobile terminal. An example of the location information module 115 may include a Global Position System (GPS) module or a wireless fidelity (WiFi) module.

Still referring to FIG. 1, the A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Also, user's position information and the like may be calculated from the image frames acquired by the camera 121. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data input by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply 190, the presence or absence of a coupling or other connection between the interface unit 170 and an external device.

The output unit 150 is configured to output an audio signal, a video signal or a tactile signal. The output unit 150 may include a display unit 151, an audio output module 153, an alarm unit 154 and a haptic module 155.

The display unit 151 may output information processed in the mobile terminal 100. For example, when the mobile terminal is operating in a phone call mode, the display unit 151 will provide a User Interface (UI) or a Graphic User Interface (GUI), which includes information associated with the call. As another example, if the mobile terminal is in a video call mode or a capturing mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, an e-ink display or the like.

Some of such displays 151 may be implemented as a transparent type or an optical transparent type through which the exterior is visible, which is referred to as 'transparent display'. A representative example of the transparent display may include a Transparent OLED (TOLED), and the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the displays 151 may be arranged on one surface to be spaced apart from or integrated with each other, or may be arranged on different surfaces.

The display unit 151 may also be implemented as a stereoscopic display unit 152 for displaying stereoscopic images.

Here, the stereoscopic image may be a three-dimensional (3D) stereoscopic image, and the 3D stereoscopic image is an image refers to an image making a viewer feel that a gradual depth and reality of an object on a monitor or a screen is the same as a reality space. A 3D stereoscopic image is implemented by using binocular disparity. Binocular disparity refers to disparity made by the positions of two eyes. When two eyes view different 2D images, the images are transferred to the brain through the retina and combined in the brain to provide the perception of depth and reality sense.

The stereoscopic display unit 152 may employ a stereoscopic display scheme such as stereoscopic scheme (a glass scheme), an auto-stereoscopic scheme (glassless scheme), a projection scheme (holographic scheme), or the like. Stereoscopic schemes commonly used for home television receivers, or the like, include Wheatstone stereoscopic scheme, or the like.

The auto-stereoscopic scheme includes, for example, a parallax barrier scheme, a lenticular scheme, an integral imaging scheme, a switchable scheme, or the like. The projection scheme includes a reflective holographic scheme, a transmissive holographic scheme, or the like.

In general, a 3D stereoscopic image is comprised of a left image (a left eye image) and a right image (a right eye image). According to how left and right images are combined into a 3D stereoscopic image, the 3D stereoscopic imaging method is divided into a top-down method in which left and right images are disposed up and down in a frame, an L-to-R (left-to-right, side by side) method in which left and right images are disposed left and right in a frame, a checker board method in which fragments of left and right images are disposed in a tile form, an interlaced method in which left and right images are alternately disposed by columns and rows, and a time sequential (or frame by frame) method in which left and right images are alternately displayed by time.

Also, as for a 3D thumbnail image, a left image thumbnail and a right image thumbnail are generated from a left image and a right image of the original image frame, respectively, and then combined to generate a single 3D thumbnail image. In general, thumbnail refers to a reduced image or a reduced still image. The thusly generated left image thumbnail and the right image thumbnail are displayed with a horizontal distance difference therebetween by a depth corresponding to the disparity between the left image and the right image on the screen, providing a stereoscopic space sense.

As illustrated, a left image and a right image required for implementing a 3D stereoscopic image is displayed on the stereoscopic display unit 152 by a stereoscopic processing unit (not shown). The stereoscopic processing unit may receive the 3D image and extract the left image and the right image, or may receive the 2D image and change it into a left image and a right image.

Here, if the display unit 151 and a touch sensitive sensor (referred to as a touch sensor) have a layered structure therebetween (referred to as a 'touch screen'), the display unit 151 may be used as an input device as well as an output device. The touch sensor may be implemented as a touch film, a touch sheet, a touchpad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors, corresponding signals are transmitted to a touch controller. The touch controller processes the received signals, and then transmits corresponding data to the controller 180. Accordingly, the controller 180 may sense which region of the display unit 151 has been touched.

Still referring to FIG. 1, a proximity sensor 141 may be arranged at an inner region of the mobile terminal 100 covered by the touch screen, or near the touch screen. The proximity sensor 141 may be provided as one example of the sensing unit 140. The proximity sensor 141 indicates a sensor to sense presence or absence of an object approaching to a surface to be sensed, or an object disposed near a surface to be sensed, by using an electromagnetic field or infrared rays without a mechanical contact. The proximity sensor 141 has a longer lifespan and a more enhanced utility than a contact sensor.

The proximity sensor 141 may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

When a touch sensor is overlaid on the stereoscopic display unit 152 in a layered manner (hereinafter, referred to as 'stereoscopic touch screen'), or when the stereoscopic display unit 152 and a 3D sensor sensing a touch operation are combined, the stereoscopic display unit 152 may also be used as a 3D input device.

As examples of the 3D sensor, the sensing unit 140 may include a proximity sensor 141, a stereoscopic touch sensing unit 142, an ultrasonic sensing unit 143, and a camera sensing unit 144.

The proximity sensor 141 detects the distance between a sensing object (e.g., the user's finger or a stylus pen) applying a touch by using the force of electromagnetism or infrared rays without a mechanical contact and a detect surface. By using the distance, the terminal recognizes which portion of a stereoscopic image has been touched. In particular, when the touch screen is an electrostatic touch screen, the degree of proximity of the sensing object is detected based on a change of an electric field according to proximity of the sensing object, and a touch to the 3D image is recognized by using the degree of proximity.

The stereoscopic touch sensing unit 142 is configured to detect the strength or duration of a touch applied to the touch screen. For example, the stereoscopic touch sensing unit 142 may sense touch pressure. When the pressure is strong, it may recognize the touch as a touch with respect to an object located farther away from the touch screen toward the inside of the terminal.

The ultrasonic sensing unit 143 is configured to recognize position information of the sensing object by using ultrasonic waves.

The ultrasonic sensing unit 143 may include, for example, an optical sensor and a plurality of ultrasonic sensors. The optical sensor is configured to sense light and the ultrasonic sensors may be configured to sense ultrasonic waves. Since light is much faster than ultrasonic waves, a time for which the light reaches the optical sensor is much shorter than a time for which the ultrasonic wave reaches the ultrasonic sensor. Therefore, a position of a wave generation source may be calculated by using a time difference from the time that the ultrasonic wave reaches based on the light as a reference signal.

The camera sensing unit 144 includes at least one of a camera 121, a photo sensor, and a laser sensor.

For example, the camera 121 and the laser sensor may be combined to detect a touch of the sensing object with respect to a 3D stereoscopic image. When distance information detected by a laser sensor is added to a 2D image captured by the camera, 3D information can be obtained.

In another example, a photo sensor may be laminated on the display device. The photo sensor is configured to scan a movement of the sensing object in proximity to the touch screen. In detail, the photo sensor includes photo diodes and transistors at rows and columns to scan content mounted on the photo sensor by using an electrical signal changing according to the quantity of applied light. Namely, the photo sensor calculates the coordinates of the sensing object according to variation of light to thus obtain position information of the sensing object.

The audio output module 153 may convert and output as sound audio data received from the wireless communication unit 110 or stored in the memory 160 in a call signal reception mode, a call mode, a record mode, a voice recognition mode, a broadcast reception mode, and the like. Also, the audio output module 153 may provide audible outputs related to a particular function performed by the mobile terminal 100 (e.g., a call signal reception sound, a message reception sound, etc.). The audio output module 153 may include a speaker, a buzzer or the like.

The alarm unit 154 outputs a signal for informing about an occurrence of an event of the mobile terminal 100. Events generated in the mobile terminal may include call signal reception, message reception, key signal inputs, a touch input etc. In addition to video or audio signals, the alarm unit 154 may output signals in a different manner, for example, using vibration to inform about an occurrence of an event. The video or audio signals may be also outputted via the audio output module 153, so the display unit 151 and the audio output module 153 may be classified as parts of the alarm unit 154.

A haptic module 155 generates various tactile effects the user may feel. A typical example of the tactile effects generated by the haptic module 155 is vibration. The strength and pattern of the haptic module 155 can be controlled. For example, different vibrations may be combined to be outputted or sequentially outputted.

Besides vibration, the haptic module 155 may generate various other tactile effects such as an effect by stimulation such as a pin arrangement vertically moving with respect to a contact skin, a spray force or suction force of air through a jet orifice or a suction opening, a contact on the skin, a contact of an electrode, electrostatic force, etc., an effect by reproducing the sense of cold and warmth using an element that can absorb or generate heat.

The haptic module 155 may be implemented to allow the user to feel a tactile effect through a muscle sensation such as fingers or arm of the user, as well as transferring the tactile effect through a direct contact. Two or more haptic modules 155 may be provided according to the configuration of the mobile terminal 100.

The memory 160 may store software programs used for the processing and controlling operations performed by the controller 180, or may temporarily store data (e.g., a phonebook, messages, still images, video, etc.) that are inputted or outputted. In addition, the memory 160 may store data regarding various patterns of vibrations and audio signals outputted when a touch is inputted to the touch screen.

The memory 160 may include at least one type of storage medium including a Flash memory, a hard disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 160 over the Internet.

The interface unit 170 serves as an interface with every external device connected with the mobile terminal 100. For example, the external devices may transmit data to an external device, receives and transmits power to each element of the mobile terminal 100, or transmits internal data of the mobile terminal 100 to an external device. For example, the interface unit 170 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating the authority of using the mobile terminal 100 and may include a user identity module (UIM), a subscriber identity module (SIM) a universal subscriber identity module (USIM), and the like. In addition, the device having the identification module (referred to as 'identifying device', hereinafter) may take the form of a smart card. Accordingly, the identifying device may be connected with the terminal 100 via the interface unit 170.

When the mobile terminal 100 is connected with an external cradle, the interface unit 170 may serve as a passage to allow power from the cradle to be supplied therethrough to the mobile terminal 100 or may serve as a passage to allow various command signals inputted by the user from the cradle to be transferred to the mobile terminal therethrough. Various command signals or power inputted from the cradle may operate as signals for recognizing that the mobile terminal is properly mounted on the cradle.

The controller 180 typically controls the general operations of the mobile terminal. For example, the controller 180 performs controlling and processing associated with voice calls, data communications, video calls, and the like. The controller 180 may include a multimedia module 181 for reproducing multimedia data. The multimedia module 181 may be configured within the controller 180 or may be configured to be separated from the controller 180.

The controller 180 may perform a pattern recognition processing to recognize a handwriting input or a picture drawing input performed on the touch screen as characters or images, respectively.

Also, the controller 180 may execute a lock state to restrict a user from inputting control commands for applications when a state of the mobile terminal meets a preset condition. Also, the controller 180 may control a lock screen displayed in the lock state based on a touch input sensed on the display unit 151 in the lock state of the mobile terminal.

The power supply unit 190 receives external power or internal power and supplies appropriate power required for operating respective elements and components under the control of the controller 180.

Various embodiments described herein may be implemented in a computer-readable or its similar medium using, for example, software, hardware, or any combination thereof.

For hardware implementation, the embodiments described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform the functions described herein. In some cases, such embodiments may be implemented by the controller 180 itself.

For software implementation, the embodiments such as procedures or functions described herein may be implemented by separate software modules. Each software module may perform one or more functions or operations described herein.

Software codes can be implemented by a software application written in any suitable programming language. The software codes may be stored in the memory 160 and executed by the controller 180.

Hereinafter, a communication system which is operable with the mobile terminal 100 according to the present disclosure will be described.

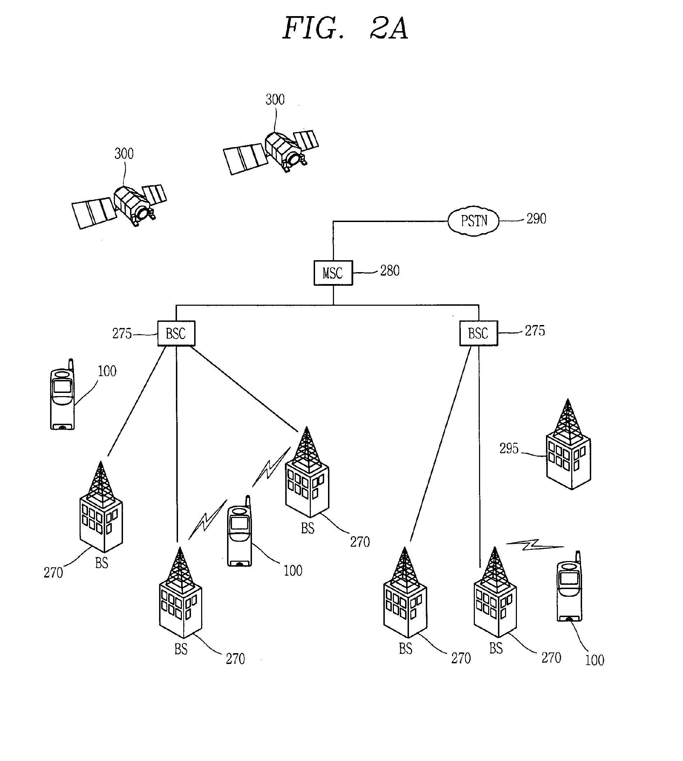

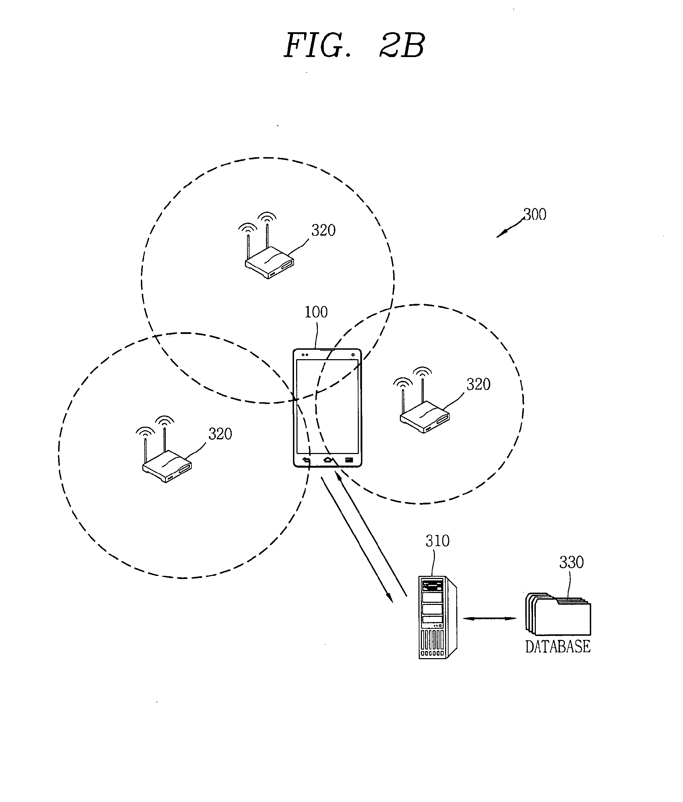

FIGS. 2a and 2b are conceptual views of a communication system operable with a mobile terminal 100 in accordance with the present disclosure.

First, referring to FIG. 2a, such communication systems utilize different air interfaces and/or physical layers. Examples of such air interfaces utilized by the communication systems include Frequency Division Multiple Access (FDMA), Time Division Multiple Access (TDMA), Code Division Multiple Access (CDMA), and Universal Mobile Telecommunications System (UMTS), the Long Term Evolution (LTE) of the UMTS, the Global System for Mobile Communications (GSM), and the like.

By way of non-limiting example only, further description will relate to a CDMA communication system, but such teachings apply equally to other system types including the CDMA wireless communication system.

Referring now to FIG. 2a, a CDMA wireless communication system is shown having a plurality of mobile terminals 100, a plurality of base stations (BSs) 270, base station controllers (BSCs) 275, and a mobile switching center (MSC) 280. The MSC 280 is configured to interface with a conventional Public Switch Telephone Network (PSTN) 290. The MSC 280 is also configured to interface with the BSCs 275. The BSCs 275 are coupled to the base stations 270 via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs 275 can be included in the system as shown in FIG. 2a.

Each base station 270 may include one or more sectors, each sector having an omnidirectional antenna or an antenna pointed in a particular direction radially away from the base station 270. Alternatively, each sector may include two or more different antennas. Each base station 270 may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations 270 may also be referred to as Base Station Transceiver Subsystems (BTSs). In some cases, the term "base station" may be used to refer collectively to a BSC 275, and one or more base stations 270. The base stations may also be denoted as "cell sites." Alternatively, individual sectors of a given base station 270 may be referred to as cell sites.

A broadcasting transmitter (BT) 295, as shown in FIG. 2a, transmits a broadcast signal to the mobile terminals 100 operating within the system. The broadcast receiving module 111 (FIG. 1) is typically configured inside the mobile terminal 100 to receive broadcast signals transmitted by the BT 295.

FIG. 2a further depicts several Global Positioning System (GPS) satellites 300. Such satellites 300 facilitate locating the position of at least one of plural mobile terminals 100. Two satellites are depicted in FIG. 2a, but it is understood that useful position information may be obtained with greater or fewer satellites than two satellites. The GPS module 115 (FIG. 1) is typically configured to cooperate with the satellites 300 to obtain desired position information. It is to be appreciated that other types of position detection technology, (i.e., location technology that may be used in addition to or instead of GPS location technology) may alternatively be implemented. If desired, at least one of the GPS satellites 300 may alternatively or additionally be configured to provide satellite DMB transmissions.

During typical operation of the wireless communication system, the base stations 270 receive sets of reverse-link signals from various mobile terminals 100. The mobile terminals 100 are engaging in calls, messaging, and executing other communications. Each reverse-link signal received by a given base station 270 is processed within that base station 270. The resulting data is forwarded to an associated BSC 275. The BSC 275 provides call resource allocation and mobility management functionality including the orchestration of soft handoffs between base stations 270. The BSCs 275 also route the received data to the MSC 280, which then provides additional routing services for interfacing with the PSTN 290. Similarly, the PSTN 290 interfaces with the MSC 280, and the MSC 280 interfaces with the BSCs 275, which in turn control the base stations 270 to transmit sets of forward-link signals to the mobile terminals 100.

Hereinafter, description will be given of a method for acquiring location information of a mobile terminal using a wireless fidelity (WiFi) positioning system (WPS), with reference to FIG. 2b.

The WiFi positioning system (WPS) 300 refers to a location determination technology based on a wireless local area network (WLAN) using WiFi as a technology for tracking the location of the mobile terminal 100 using a WiFi module provided in the mobile terminal 100 and a wireless access point 320 for transmitting and receiving to and from the WiFi module.

The WiFi positioning system 300 may include a WiFi location determination server 310, a mobile terminal 100, a wireless access point (AP) 320 connected to the mobile terminal 100, and a database 330 stored with any wireless AP information.

The WiFi location determination server 310 extracts the information of the wireless AP 320 connected to the mobile terminal 100 based on a location information request message (or signal) of the mobile terminal 100. The information of the wireless AP 320 may be transmitted to the WiFi location determination server 310 through the mobile terminal 100 or transmitted to the WiFi location determination server 310 from the wireless AP 320.

The information of the wireless AP extracted based on the location information request message of the mobile terminal 100 may be at least one of MAC address, SSID, RSSI, channel information, privacy, network type, signal strength and noise strength.

The WiFi location determination server 310 receives the information of the wireless AP 320 connected to the mobile terminal 100 as described above, and compares the received wireless AP 320 information with information contained in the preestablished database 330 to extract (or analyze) the location information of the mobile terminal 100.

On the other hand, referring to FIG. 2b, as an example, the wireless AP connected to the mobile terminal 100 is illustrated as a first, a second, and a third wireless AP 320. However, the number of wireless APs connected to the mobile terminal 100 may be changed in various ways according to a wireless communication environment in which the mobile terminal 100 is located. When the mobile terminal 100 is connected to at least one of wireless APs, the WiFi positioning system 300 can track the location of the mobile terminal 100.

Next, considering the database 330 stored with any wireless AP information in more detail, various information of any wireless APs disposed at different locations may be stored in the database 330.

The information of any wireless APs stored in the database 330 may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like.

In this manner, any wireless AP information and location information corresponding to the any wireless AP are stored together in the database 330, and thus the WiFi location determination server 310 may retrieve wireless AP information corresponding to the information of the wireless AP 320 connected to the mobile terminal 100 from the database 330 to extract the location information matched to the searched wireless AP, thereby extracting the location information of the mobile terminal 100.

Furthermore, the extracted location information of the mobile terminal 100 may be transmitted to the mobile terminal 100 through the WiFi location determination server 310, thereby acquiring the location information of the mobile terminal 100.

Hereinafter, a mobile terminal according to an embodiment of the present disclosure as illustrated in FIG. 1 or a mobile terminal disposed with the constituent elements of the mobile terminal or the structure of a mobile terminal will be described.

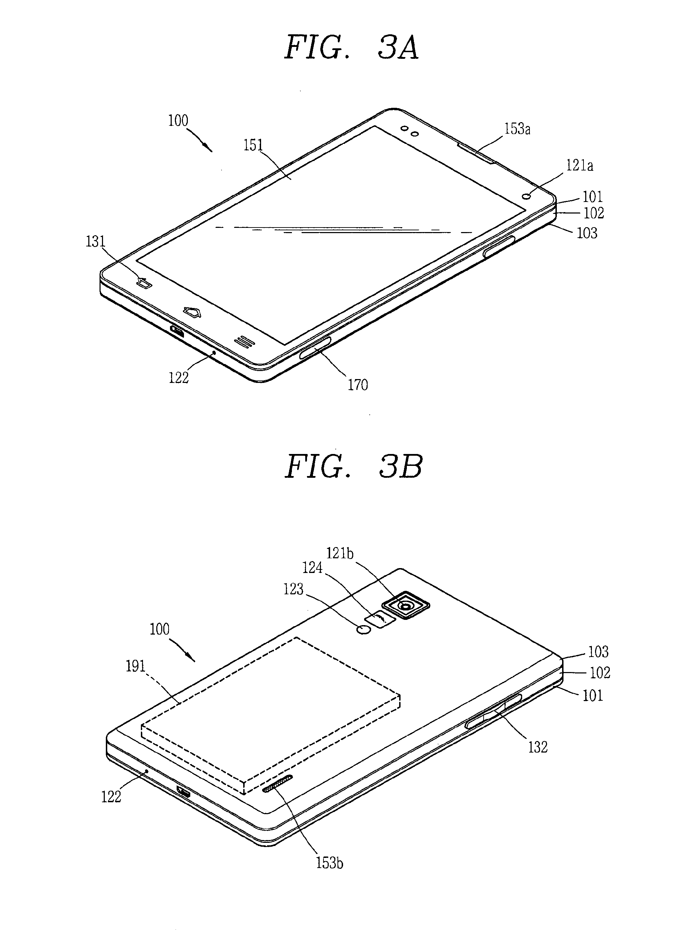

FIG. 3a is a front perspective view illustrating an example of the mobile terminal 100 associated with the present disclosure.

The mobile terminal 100 disclosed herein is provided with a bar-type terminal body. However, the present invention may not be limited to this, but also may be applicable to various structures such as watch type, clip type, glasses type or folder type, flip type, swing type, swivel type, or the like, in which two and more bodies are combined with each other in a relatively movable manner.

The body includes a case (casing, housing, cover, etc.) forming the appearance of the terminal. In this embodiment, the case may be divided into a front case 101 and a rear case 102. Various electronic components is incorporated into a space formed between the front case 101 and the rear case 102. At least one middle case may be additionally disposed between the front case 101 and the rear case 102, and a battery cover 103 for covering the battery 191 may be detachably configured at the rear case 102.

The cases may be formed by injection-molding a synthetic resin or may be also formed of a metal, for example, stainless steel (STS), titanium (Ti), or the like.

A display unit 151, a first audio output module 153a, a first camera 121a, a first manipulating unit 131 and the like may be disposed on a front surface of the terminal body, and a microphone 122, an interface unit 170, a second manipulating unit 132 and the like may be provided on a lateral surface thereof.

The display unit 151 may be configured to display (output) information being processed in the mobile terminal 100. The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

The display unit 151 may include a touch sensing means to receive a control command by a touch method. When a touch is made to any one place on the display unit 151, the touch sensing means may be configured to sense this touch and enter the content corresponding to the touched place. The content entered by a touch method may be a text or numerical value, or a menu item capable of indication or designation in various modes.

The touch sensing means may be formed with transparency to allow visual information displayed on the display unit 151 to be seen, and may include a structure for enhancing the visibility of a touch screen at bright places. Referring to FIG. 3a, the display unit 151 occupies a most portion of the front surface of the front case 101.

The first audio output unit 153a and the first camera 121a are disposed in a region adjacent to one of both ends of the display unit 151, and the first manipulation input unit 131 and the microphone 122 are disposed in a region adjacent to the other end thereof. The second manipulation interface 132 (refer to FIG. 3b), the interface 170, and the like may be disposed on a lateral surface of the terminal body.

The first audio output module 153a may be implemented in the form of a receiver for transferring voice sounds to the user's ear or a loud speaker for outputting various alarm sounds or multimedia reproduction sounds.

It may be configured such that the sounds generated from the first audio output module 153a are released along an assembly gap between the structural bodies. In this case, a hole independently formed to output audio sounds may not be seen or hidden in terms of appearance, thereby further simplifying the appearance of the mobile terminal 100. However, the present invention may not be limited to this, but a hole for releasing the sounds may be formed on the window.

The first camera 121a processes video frames such as still or moving images obtained by the image sensor in a video call mode or capture mode. The processed video frames may be displayed on the display unit 151.

The user input unit 130 is manipulated to receive a command for controlling the operation of the mobile terminal 100. The user input unit 130 may include a first and a second manipulation unit 131, 132. The first and the second manipulation unit 131, 132 may be commonly referred to as a manipulating portion, and any method may be employed if it is a tactile manner allowing the user to perform manipulation with a tactile feeling such as touch, push, scroll or the like.

In the present drawing, it is illustrated on the basis that the first manipulation unit 131 is a touch key, but the present disclosure may not be necessarily limited to this. For example, the first manipulation unit 131 may be configured with a mechanical key, or a combination of a touch key and a mechanical key.

The content received by the first and/or second manipulation units 131, 132 may be set in various ways. For example, the first manipulation unit 131 may be used to receive a command such as menu, home key, cancel, search, or the like, and the second manipulation unit 132 may receive a command, such as controlling a volume level being outputted from the first audio output module 153a, or switching into a touch recognition mode of the display unit 151.

The microphone 122 may be formed to receive the user's voice, other sounds, or the like. The microphone 122 may be provided at a plurality of places, and configured to receive stereo sounds.

The interface unit 170 serves as a path allowing the mobile terminal 100 to exchange data with external devices. For example, the interface unit 170 may be at least one of a connection terminal for connecting to an earphone in a wired or wireless manner, a port for near field communication (for example, an Infrared Data Association (IrDA) port, a Bluetooth port, a wireless LAN port, and the like), and a power supply terminal for supplying power to the mobile terminal 100. The interface unit 170 may be implemented in the form of a socket for accommodating an external card such as Subscriber Identification Module (SIM) or User Identity Module (UIM), and a memory card for information storage.

FIG. 3b is a rear perspective view illustrating mobile terminal 100 illustrated in FIG. 3a.

Referring to FIG. 3b, a second camera 121b may be additionally mounted at a rear surface of the terminal body, namely, the rear case 102. The second camera 121b has an image capturing direction, which is substantially opposite to the direction of the first camera unit 121a (refer to FIG. 3a), and may have a different number of pixels from that of the first camera unit 121a.

For example, it is preferable that the first camera 121a has a relatively small number of pixels enough not to cause difficulty when the user captures his or her own face and sends it to the other party during a video call or the like, and the second camera 121b has a relatively large number of pixels since the user often captures a general object that is not sent immediately. The first and the second camera 121a, 121b may be provided in the terminal body in a rotatable and popupable manner.

Furthermore, a flash 123 and a mirror 124 may be additionally disposed adjacent to the second camera 121b. The flash 123 illuminates light toward an object when capturing the object with the second camera 121b. The mirror 124 allows the user to look at his or her own face, or the like, in a reflected way when capturing himself or herself (in a self-portrait mode) by using the second camera 121b.

A second audio output unit 153b may be additionally disposed at a rear surface of the terminal body. The second audio output unit 153b together with the first audio output unit 153a (refer to FIG. 3a) can implement a stereo function, and may be also used to implement a speaker phone mode during a phone call.

An antenna (not shown) for receiving broadcast signals may be additionally disposed at a lateral surface of the terminal body in addition to an antenna for making a phone call or the like. The antenna constituting part of the broadcast receiving module 111 (refer to FIG. 1) may be provided in the terminal body in a retractable manner.

A power supply unit 190 (refer to FIG. 1) for supplying power to the mobile terminal 100 may be mounted on the terminal body. The power supply unit 190 may be incorporated into the terminal body, or may include a battery 191 configured in a detachable manner on the outside of the terminal body. According to the drawing, it is illustrated that the battery cover 103 is combined with the rear case 102 to cover the battery 191, thereby restricting the battery 191 from being released and protecting the battery 191 from external shocks and foreign substances.

A process of processing information that is input into a mobile terminal in order to practice the invention is described below.

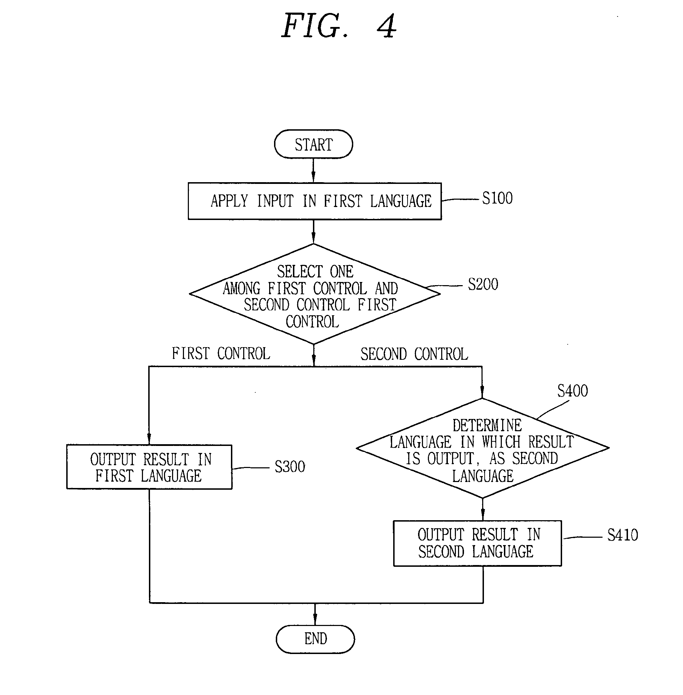

FIG. 4 is a flow chart for describing a method of controlling the mobile terminal, according to the present invention.

First, a voice or a text in a first language is input, through an input unit, into the mobile terminal (S100).

The input unit refers to a user input unit provided to the mobile terminal. The user input includes a touch input unit 230 that is output to a touch screen, a keypad input unit into which a text is input through a push input, a microphone into which a voice is input, and the like.

The first language is an arbitrary language that is possible to input through the input unit of the mobile terminal. For example, the first language is one among all languages in the world, including one, among Korean, English, Japanese, Chinese, French, German, Spanish, African language, Indian, and Arabic.

The text refers to a message that is input, in the first language, into the mobile terminal, a search word in a Web browser, or the like. The voice refers to a human voice that is input, in the first language, into the mobile terminal.

Next, a controller selects at least one among first control and second control in association with control that outputs to a display unit 251 information relating to contents that are input in the first language (S200). One among the first control and the second control may be selected, but only one is not necessarily selected. All the first control and the control may be selected.

The information relating to the contents that are input in the first language may be output as input, and may be output as a result of the input contents being processed in the mobile terminal according to an algorithm. For example, if the contents that are input in the first language are output as are input, this is when a message that is input through an input window is output to the display unit 251 of the mobile terminal. However, even though a user applies an input in the first language, a language in which an output is provided does not need necessarily to be the first language and may be another language in which the output that takes on the same meaning is provided. When the result of the input contents being processed in the mobile terminal according to the algorithm is output, this may be when a result of searching in a Web browser or a result of executing an application is output. The result of the input contents being processed in the mobile terminal according to the algorithm is not necessarily output as the text that takes on the same meaning.

The first control includes control that outputs the information relating to the contents being input in the first language to the display unit 251 in the first language that is the same as a language in which an input is applied. For example, the first control is control that outputs a Korean-input text in Korean or is control that outputs in Korean a result of setting the search word to be in Korean in the Web browser and thus conducting a search. Likewise, if the language in which an input is applied is English, Japanese, or Chinese, a language in which the result is output to the display unit 251 is English, Japanese, or Chinese, respectively.

The second control includes control that outputs the result to the display unit 251 in a second language different from the language in which an input is applied. The second language is one among all the languages in the world, but is different from the first language. For example, even though an input is applied in Korean (the first language), the second control includes control that output the result to the display unit 251 in English (the second language.

Inputting a text or a voice in the first language through the input unit (S100) and selecting at least one among the first control and the second control (S200) may be performed in reverse. That is, at least one among the first control and the second control is first selected in the controller, and after the selection, a text or a voice is input in the first language through the input unit.

If the first control is selected, information relating to contents that are input in the first language is output in the first language (S300). For example, information relating to contents that are input in Korean is output in Korean, and information relating to contents that are input in English is output in English.

Then, if the second control is selected, information relating to contents that are input in the first language is output in the second language different from the first language (S410). However, before the result is output, Step S400 of determining as the second language at least one among languages other than the first language is performed.

The number of the first languages may be 2 or greater. If an input is applied, for example, in Korean and English (the first languages), when the first control is selected, the result is output in Korean and English (the first languages) are selected, and when the second language is selected, the result is output in Chinese (the second language) that is other than Korean and English.

The number of the second languages may be 2 or greater. In the previous example, the information relating to the contents that are input in Korean and English (the first language) may be output in Chinese and Japanese (the second languages) that are other than Korean and English.

If the first control and the second control are all selected, information relating to contents that are input in the first language is output in the first language and the second language. For example, information relating to contents that are input in Korean (the first language) is output in Korean (the first language) and English (the second language). Even though the first control and the second control are all selected, the number of the first languages and the number of the second languages may be all 2 or greater.

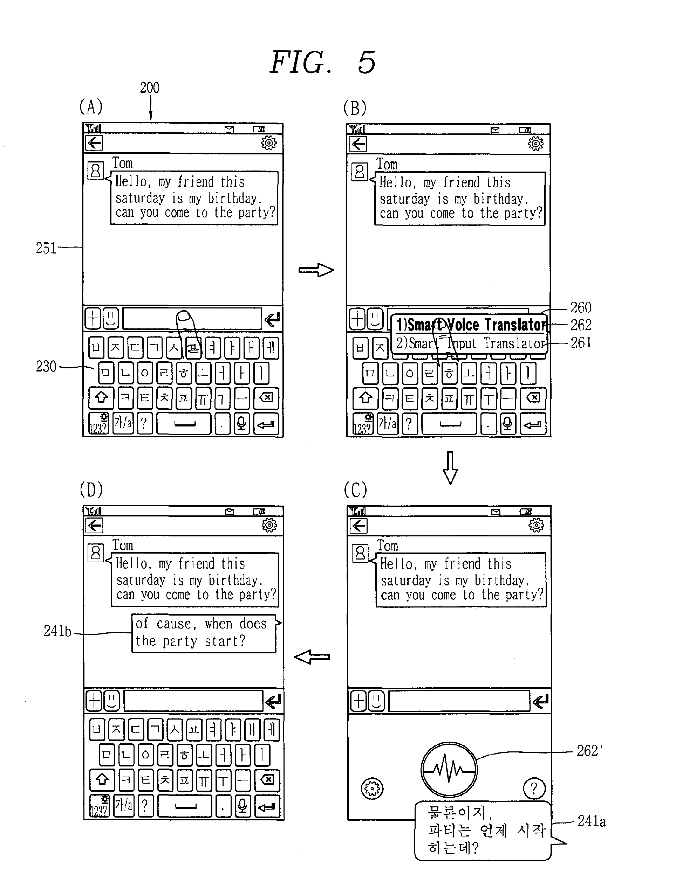

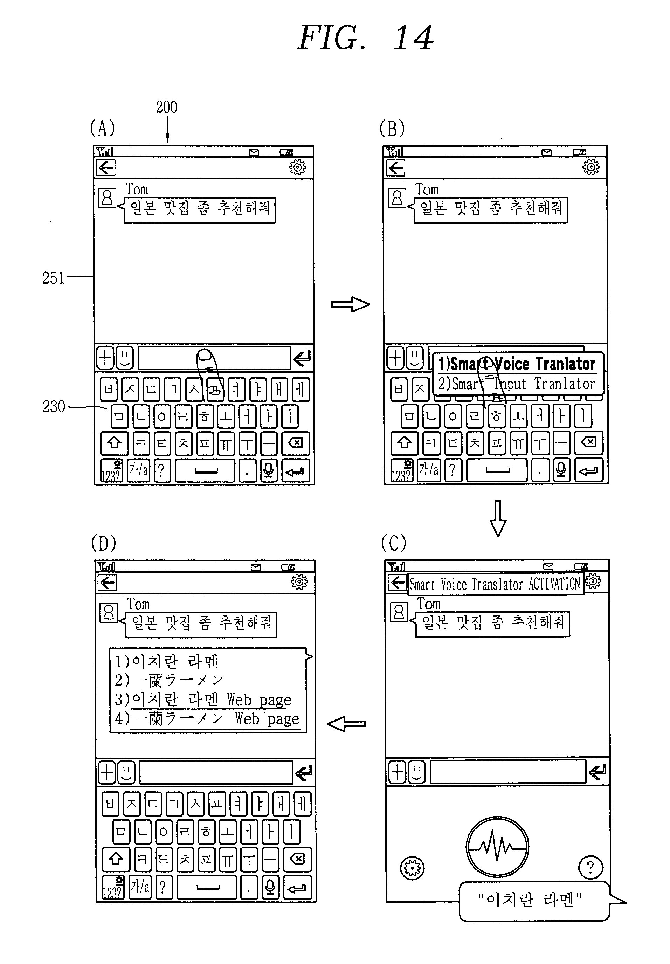

Referring to FIGS. 5A to 14D, a method of controlling the mobile terminal, described referring to the flow chart in FIG. 4, is described below according to specific embodiments.

FIGS. 5A to 9D are diagrams for describing message transmission and reception that is realized in the mobile terminal according to various embodiments of the present invention.

First, FIGS. 5A and 5B are diagrams for describing the second control that converts a voice being input in the first language into the second language and outputs the converted voice.

The mobile terminal described in FIG. 5A includes the display unit 251, and the touch input unit 230 is formed on the display unit 251. An application by which a message is exchanged between the user of the mobile terminal and a user of a different: mobile terminal is executed on the mobile terminal and the message received from the different mobile terminal is output to the display unit 251. The application by which the message is exchanged between the user of the mobile terminal and the user of the different mobile terminal is a short message service (SMS), a multimedia message service (MMS), or a mobile messenger application.

The first control and the second control are executed based on a touch input that is applied from the user. When the user's touch input is applied, a selection window from which to select at least one among the first control and the second control is output to the display unit 251. Then, one among the first control and the second control is selected from the selection window that is output to the display unit 251 and the selected control is executed.

In addition, one control is set to be executed by default, the other control is selected with the touch input, whenever necessary. For example, because the first control that outputs the result in the same language as the input is applied to the mobile terminal is generally more used in the mobile terminal, the first control is set to be executed by default and thus the first control is usually executed. The second control, if necessary, is executed with the touch input. In such a case, the selection window 260 from which to select the second control with the touch input is output to the display unit 251, and the second control is executed by applying the touch input to the selection window 260 for selection of the second control. The touch with which the selection window 260 is output may be a long press touch that is maintained in a touched state for a predetermined time in a manner that distinguishes itself from other touches.

The display unit 251, as illustrated in FIG. 5A, includes the touch input unit 230, and when the touch input is applied to the touch input unit 230, the selection window 260 from which to select the second control, as illustrated in FIG. 5B, is output.

The selection window 260 is formed in such a way that one among the text input 261 and the voice input 262 is selected as a first-language input manner, and when the touch input is applied to the selection window 260, one among a text input window 262' and a voice input window 261' is output to the display unit 251.

FIG. 5B illustrates that the selection window 260 from which to select one among a text input 261 or a voice input 262 in the first-language input manner is output, and that the voice is selected as the first-language input manner with touch input.

The selection of the execution of the second control is possible with the touch with which the execution of the second control is selected in the selection window asking only whether the second control is executed, but the execution of the second control may be selected by selecting one among the text input 261 and the voice input 262 as the first-language input manner. For example, when the voice input 262 is selected as the first-language input manner in FIG. 5B, the execution of the second control is selected along with the selection of the voice.

As illustrated in FIG. 5B, the voice input 262 is selected as the first-language input manner, and the second control that in a language that is other than the first language, outputs information relating to the voice being input may be referred to as "Smart Voice Translator."

With the selection of "Smart Voice Tarnslator," in controller selects control that outputs in the second language the information relating to the contents that are in the first language. If the touch is applied to a different region of the display unit 251 without selecting one among words in the selection window 260, the selection widow 260 disappears and the first control can be selected.

Referring to FIG. 5C, the voice input window 262' is output to the display unit 251 with the selection in FIG. 5B. The user can input his/her voice, in the first language, into the mobile terminal through the voice input unit. For example, the voice is input in Korean (the first language) as illustrated in FIG. 5C.

When the second control is executed, the information relating to the contents that are input in the first language is converted into the second language in accordance with a predetermined condition and is output to the display unit 251. The language in accordance with the predetermined condition is a language in which a text is output to the display unit 251, or a language in which a voice is output from an audio output module.

In addition, if the user communicates wirelessly with the other party of which contact information is stored in an address book in the mobile terminal, a language in which a text or a voice is received from the other party is the language in accordance with the predetermined condition. If the number of the languages in accordance with the predetermined condition is 2 or greater, a screen on which one among the multiple languages is selected is output to the display unit 251, the text or the voice is output in a language that is selected with the touch input that is applied to the screen for selection.

Referring to FIG. 5D, the voice being input in the first language is converted into the second language that is selected in the controller, and is output. In such a case, when a language in which a message is received from the user of the different mobile terminal is selected as the second language. FIG. 5D illustrates that according to the reception of the message in English from the user of the different mobile terminal, English is selected as the second language. Accordingly, the voice is input with Korean being selected as the first language, but an English text is output instead of a Korean text. Then, the text that is output in the second language is transmitted to the mobile terminal of the other party through a wireless communication unit. The text is output, in the second language, to the display unit 251 of the mobile terminal of the other party.

According to the present invention, the controller recognizes the language (the second language) in which the message is received from the mobile terminal of the other party, converts the language (the first language) in which the user of the mobile terminal applies the input, into the language (the second language) in which the message is received from the mobile terminal of the other party, and outputs the contents being input, in the second language and at the same time transmits the contents being input, to the mobile terminal of the other party. Accordingly, according to the present invention, an environment is developed in which a language barrier between the users of different mobile terminals that use different languages is overcome and communication is possible.

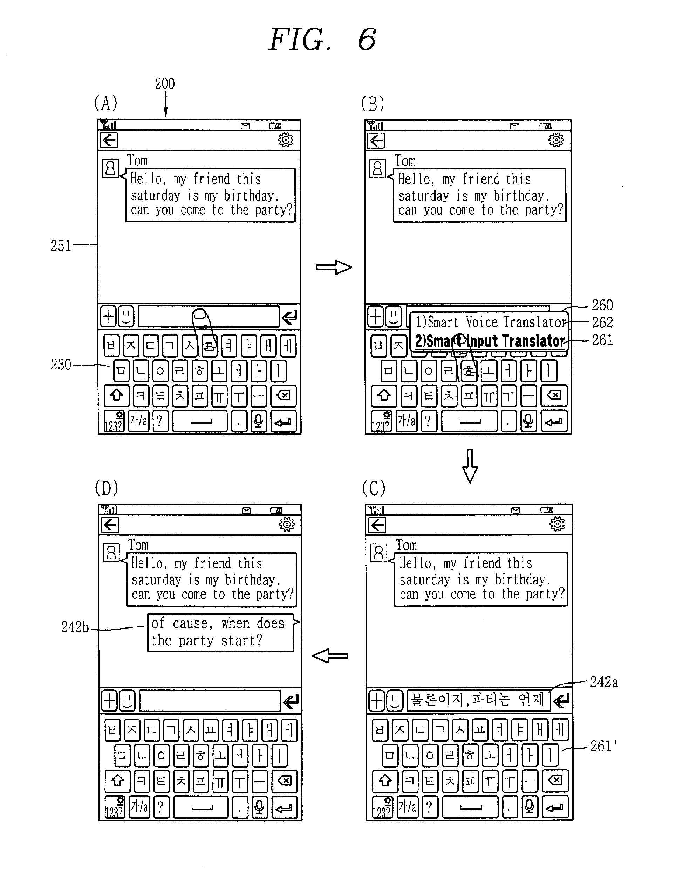

As opposed to FIGS. 5A to 5B, FIGS. 6A to 6D are diagrams for describing for describing the second control that converts a text being input in the first language into the second language and outputs the converted voice.

In FIG. 6A, the application by which the message is exchanged between the user of the mobile terminal and the user of the different mobile terminal is executed on the mobile terminal and the message received from the different mobile terminal is output to the display unit 251.

When the touch input is applied to the touch input unit 230, the selection window 260, which is formed in such a way that one among the text input 261 and the voice input 262 is selected as the first-language input manner from the selection window 260, is output to the display unit 251.

In FIG. 6B, the selection window 260 from which to select one among the text input 261 and the voice input 262 as the first-language input manner is output, and when the touch input is applied to the selection window 260, one among the text input window 261' and the voice input window 262' is output to the display unit 251. FIG. 6B, as opposed to FIGS. 5A to 5D, illustrates that the text input 261 is selected as the first-language input manner. When one among the voice input 262 and the text input 261 is selected as the first-language input manner, in the controller, control is selected that outputs information relating to contents that are input, in the second language.

The text input 261 is selected as the first-language input manner, and the second control that in a language that is other than the first language, outputs information relating to the text being input may be referred to as "Smart Input Translator."

Referring to FIG. 6C, the text input window 261' is output to the display unit 251 with the selection of "Smart Input Translator" in FIG. 6B. The user can input the text, in the first language, into the mobile terminal through the touch input unit 230. For example, the text is input in Korean (the first language) as illustrated in FIG. 6C.

Referring to FIG. 6D, according to the input of a control command that transmits the text being input in the first language to the different terminal and at the same time, outputs the text being input in the first language to the display unit 251, the text being input in the first language is converted in to the second language selected in the controller. In such a case, when a language in which a message is received from the different mobile terminal is selected as the second language. FIG. 6D illustrates that according to the reception of the message in English from the different mobile terminal, English is selected as the second language. Accordingly, the text is input with Korean being selected as the first language, but an English text is output instead of a Korean text. Then, the text that is output in the second language is transmitted to the mobile terminal of the other party through the wireless communication unit. The text is output, in the second language, to the display unit 251 of the mobile terminal of the other party.

If the wireless communication with the other party of which contact information is stored in the address book in the mobile terminal is performed, the controller selects a language that is suitable for the other party and thus sets the suitable language to the second language. The language suitable for the other party is a language in which a name, a telephone number, and an address of the other party are stored in the address book. For example, if the name of the other party is stored, in Korean, in the address book, Korean is set to be the second language, and if the name of the other party is stored in English, English is set to be the second language.

Likewise, if the telephone number of the other party is stored in the address book along with a country code (or a country number) by which a country can be identified, a language suitable for the country code is set to be the second language. For example, a country code of Republic of Korea is 82, a country code of the United State of America is 1, a country code of Japan is 81, a country code of the People's Republic of China is 86. If the telephone number is stored along with such a country code, the controller recognizes the stored country cod and sets the language corresponding to the stored country code to be the second language.

Then, if a country in the address of the other party is Korea, the controller sets Korean to the second language, and if the country is Japan, the controller sets Japanese to the second language. If various languages are used in one country, one among the various languages that are used in the corresponding country is set to the second language. One among the multiple languages may be selected by the user, be selected based on a language in which the messages are exchanged between the user and the other party of which contact information is stored in the address book, and be selected with the frequency with which the language is used in the mobile terminal.

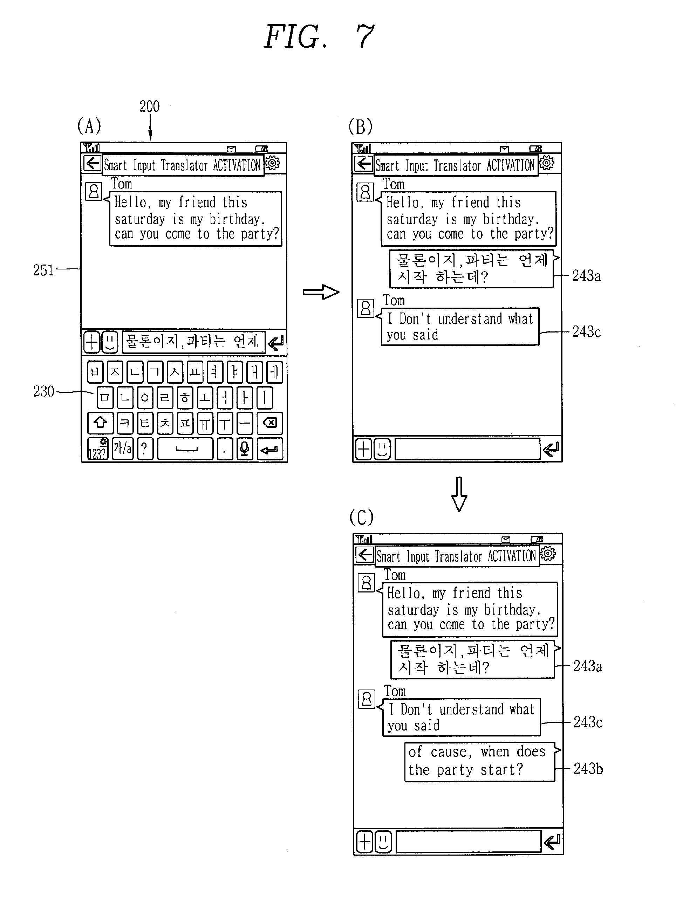

A control method of correcting recognition errors of the first control and the second control according to the present invention is described below referring to FIGS. 7A to 7C.

FIGS. 7A to 7C are diagrams for describing a method in which, if the first control is executed even though the second control is selected, the second control is executed back in the controller.

When despite selecting the execution of the second control, information relating to contents that are in the first language is output, in the first language 243a, on the display unit 251, the second language 243b is set based on a text 243c that is additionally output to the display unit 251 or on a voice that is output from the audio output module. Accordingly, the information relating to the contents that are input in the first language 243a is output back to the display unit 251 in the second language 243b.

Referring to FIG. 7A, a message that is received from the other party whom the user transmits and receives messages to and from is output to the display unit 251. Then, according to the selection of the text input as the first-language input manner, the second control is selected (Smart Input Translator ACTIVATION). Korean is selected as the first language and thus a text in Korea is input through the touch input unit 230 provided on the display unit 251.

Referring to FIG. 7B, despite selecting the second control, the text being input in the first language is output in the first language 243a. In such a case, when a message 243c is additionally received from the other party whom the user transmits and receives messages to and from, and the received message 243c is output to the display unit 251, the controller sets the second language, based on a language in which the message 243c or the voice is received, a language in which the text 243c is additionally output to the display unit 251, or the voice that is output from the audio output module.

Referring to 7C, according to the setting of the second language in the controller, the second control is executed and thus the text being input in the first language is converted into the second language and is output 243b. Accordingly, the error associated with the recognition or conversion of the language is corrected.

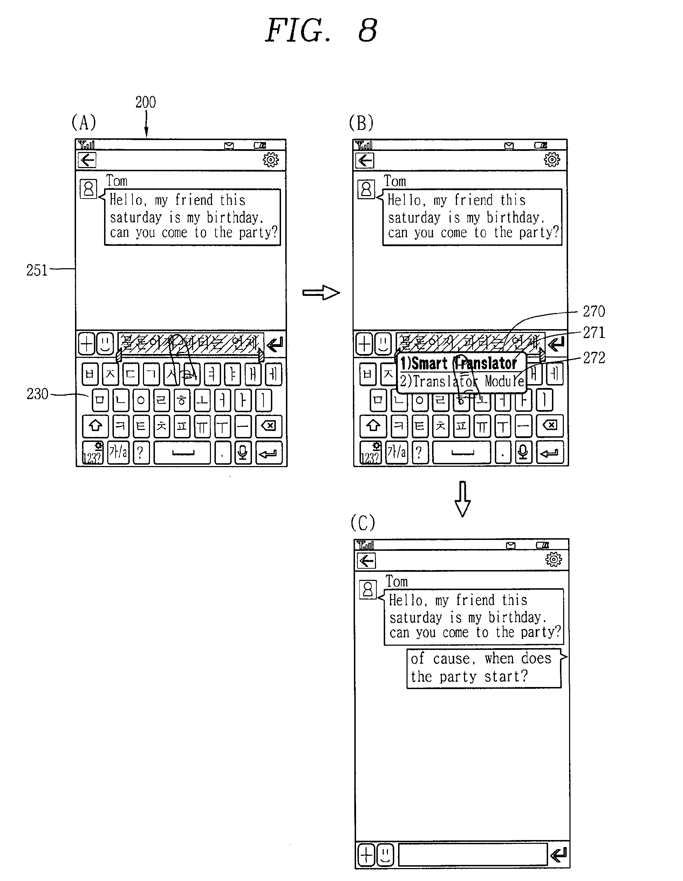

A control method according to an embodiment of the present invention, which is different from that described referring to FIGS 5A to 6D, is described referring to FIGS. 8A to 9D.

FIGS. 8A to 8C are diagrams for describing control that first inputs a message or a voice and then converts the message or voice that is input, from the first language to the second language.

In the control method described referring to FIGS. 5A to 6D, the execution of the second control is first selected, and then, when the text or the voice is input in the first language, the information relating to the contents that are input is converted into the second language and is output. In contrast, in the control method according to the embodiment of the present invention, which is to be described referring to FIGS. 8A to 8C, the text or the voice is first input in the first language, and then, the execution of the second control is selected that converts the text or the voice that is input, into the second language and outputs the text or the voice in the second language.

Referring to FIG. 8A, a message that is received from the different mobile terminal is output to the display unit 251. A text is input in the first language (Korean) through the touch input unit 230, and the text being input is designated as an editing region.

Referring to FIG. 8B, according to the application of the touch input to the text designated as the editing region, the selection window 270 is output. The selection window 270 is formed in such a way that one step, among a step in which the second control is executed that selects the second language suitable for the text being input and performs conversion 271 and a step in which the second language is selected according to the user's selection and conversion is performed 272, is selected. FIG. 8B illustrates that the control that selects the suitable second language and performs the conversion 271 (Smart Translator) is selected in the controller.

Referring to FIG. 8C, it is ensured that according to the selection in FIG. 8B, the text being input in the first language is converted into the second language (English) and is output. The selection of the suitable second language in the controller, as described referring to FIGS. 5A to 6D, depends on a language in which the text is already output to the display unit 251, a language in which the voice is output from the audio output module, a language in which the text or voice is received from the different terminal, a language in which the information on the different mobile terminal is stored in the address book, and the like.

Instead of the text, the voice may be first input in the first language and the second control may be executed that converts the voice being input into the second language. That is, the voice is input in the first language, and the voice that is input according to the selection in the controller of the second control that selects the suitable language and performs the conversion is converted into the selected second language and is output.

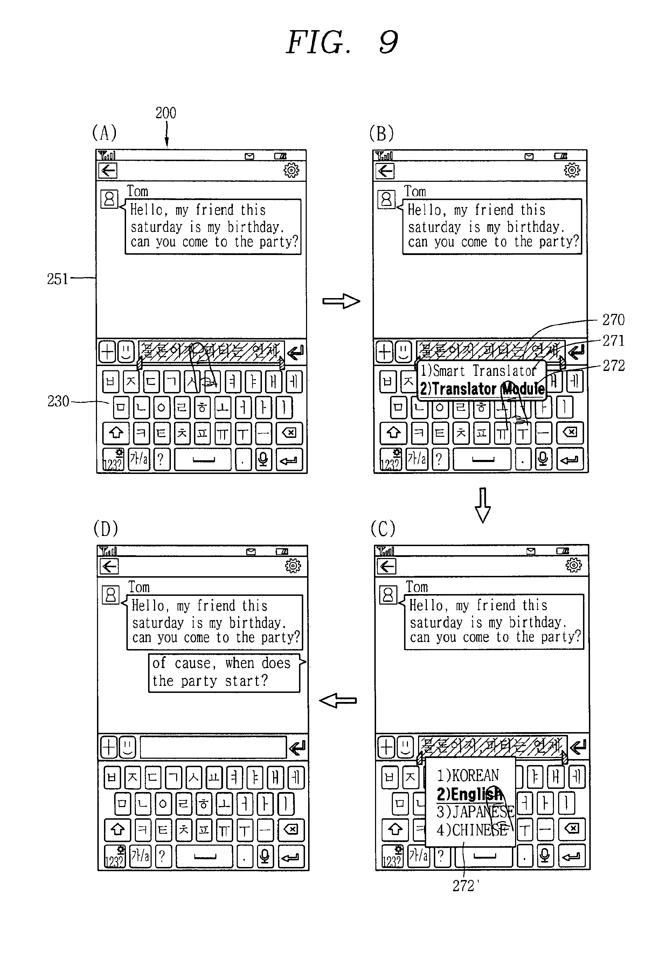

Referring to FIGS. 9A to 9D, the second control is described below that selects the second language according to the user's selection and performs the conversion.

FIGS. 9A to 9D are diagrams for describing a control method according to an embodiment of the present invention, in which a text or a voice is input and the text or the voice being input is converted into the second language and is output, but the conversion into the second language is performed directly by the user.

A language selection window 272' from which to select the second language based on the touch input is output to the display unit 251. Information relating to contents that are input in the first language is output in a language that is selected with the touch input that is applied to the language selection window 272'.

The number of the second languages that are output to the language selection window varies according to a predetermined condition. The number of the second languages may be determined based on a record of the messages that are exchanged between the mobile terminal of the user and the different mobile terminal of the other party, be determined depending to the frequency with which a language is used in the mobile terminal, and be determined based on a condition that is set in advance by the user. Alternatively, the number of the second languages may be determined based on languages used in regions associated with locational information.

Referring to FIG. 9A, a message that is received from the different mobile terminal is output to the display unit 251. A text is input in the first language (Korean) through the touch input unit 230, and the text being input is designated as the editing region.

Referring to FIG. 9B, according to the application of the touch input to the text designated as the editing region, the selection window 270 is output.

The selection window 270 is formed in such a way that one step, among the step in which the second control is executed that selects the second language suitable for the text being input and performs conversion 271 and the step in which the second language is selected according to the user's selection and conversion is performed 272, is selected. FIG. 9B illustrates that the second language is selected according to the user's selection 272 (Translator Module).

Referring to FIG. 9C, according to the selection of Translator Module, the language selection window 272' from which to select the second language is output back, and one among multiple languages is selected as the second language. FIG. 9C illustrates that English is selected as the second language.

Referring to FIG. 9D, it is ensured that the information relating to the contents that are input in the first language (Korean) is converted into the second language (English) and is output.

As described referring to FIGS. 8A to 8C, instead of the text, the voice may be first input in the first language and the second control may be executed that converts the voice being input into the second language.

Another embodiment of the present invention is described below.

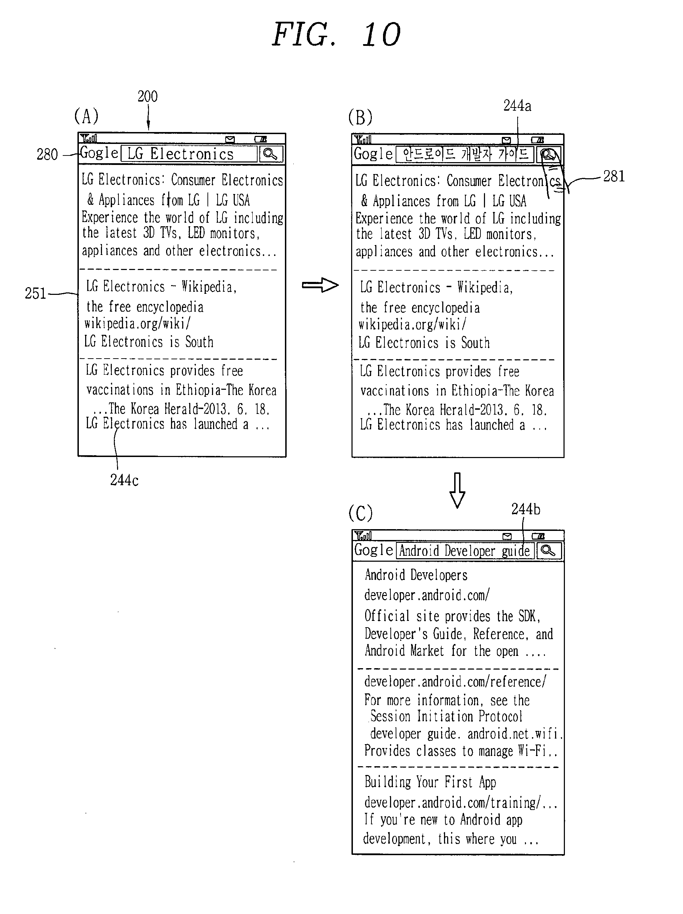

FIGS. 10A to 11C are diagrams for describing a search in a Web browser 280 that is realized in the mobile terminal according to the embodiment of the invention.

First, FIGS. 10A to 10C are diagrams illustrating that a search word is input in the first language 244a on a Web browser screen 280 and a result of a search in the second language 244b selected in the controller is output.

When the search word is input in the first language 244a into the input unit on the Web browser screen 280, and a control command 281 that conducts an information search with the search word in the Web browser 280 is input, with the execution of the second control, the result of the search is output in the second language 244b on the display unit 251. When executing the second control, a language in which a text 244c or a voice relating to the Web browser screen 280 is output is selected as the second language 244b and the result of the search is output in the selected second language 244b.

Referring to FIG. 10A, the search word that is input in English on the Web browser and the result of the search are output to the display unit 251.

FIG. 10B illustrates that the search word is input in the first language 244a (Korean) on the Web browser 280 and the control command 281 that conducts the information search is input. The text 244c being output in associated with the Web browser screen 280 is set to be in the second language by the controller. For example, as illustrated in FIG. 10B, on the Web browser 280, the result of the search that is output is set to be in the second language 244c (English). In addition, the language in which the voice in associated with the Web browser 280 screen is output may be set to be in the second language.

FIG. 10C illustrates a result of inputting the control command 281 that conducts the information search. In FIG. 10C, the search word is input in the first language 244a (Korean), but with the execution of the second control, the result of the search is output in the second language 244b.

The result of the search that is conducted in the second language may be not only output in the second language, but may be also output in the first language. Particularly, if the user of the mobile terminal who uses the first language as a mother language conducts the information search on a Web site that is based on the second language, the search word is input in the first language and the actual search is made with the search word being converted into the second language, and the result of the search is converted back into the first language and is output. Accordingly, there is an advantage in that the result of the in-depth search can be obtained on the Web side that is based also on a different language from a mother language of the user.

Accordingly, according to the present invention, communication between the users of the mobile terminals who use different languages can be encouraged. Furthermore, an environment can be created in which overcoming the language barrier, the information search can be conducted also on the Web site that is based on a different language of the mother language of the user.

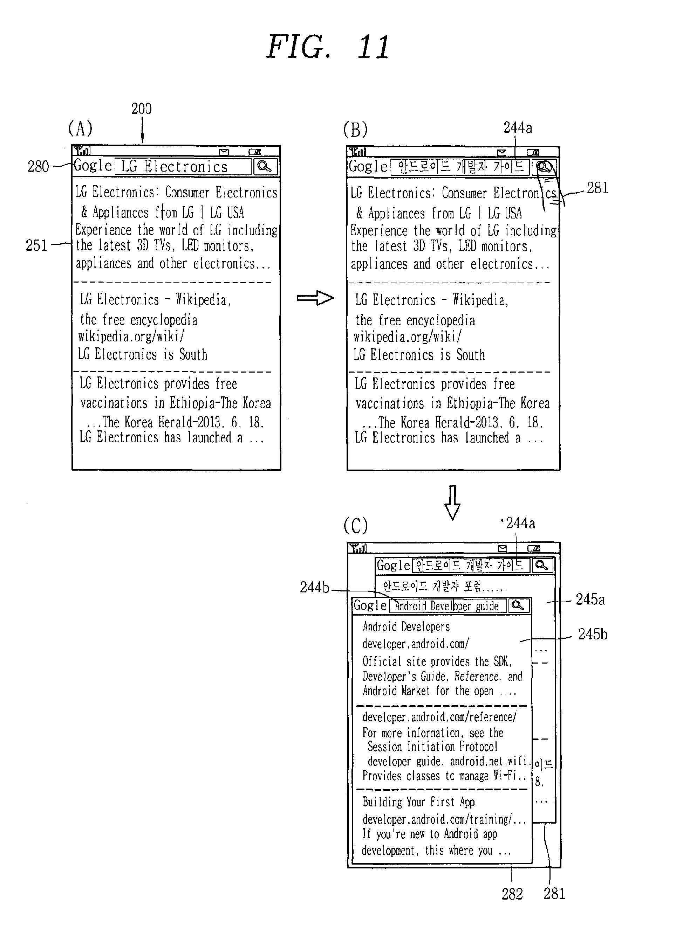

FIGS. 11A to 11C are diagrams illustrating a result that is obtained when the search word is input in the first language on the Web browser screen 280 and the first control and the second control are executed at the same time in the controller.

Results of searches in FIGS. 11A and 11B are the same as those described referring to FIGS. 10A and 10B. However, referring to FIG. 11C, according to the concurrent execution of the first control and the second control, the result of the search in the first language 244a and the result of the search in the second language 244b are output to different Web browser screens 245a, 245b on the display unit 251, respectively.

In such a case, when the touch input is applied to one among the two results, a screen on which the touched-on result of the search is displayed is enlarged in a manner that occupies most of the region of the display unit 251. The enlarged screen is returned to its original state, and then, a screen on which the other result of the search to which the touch input is applied is displayed can be also enlarged in the same manner.

Use of locational information according to an embodiment of the present invention, as opposed to what are described above, is described below.

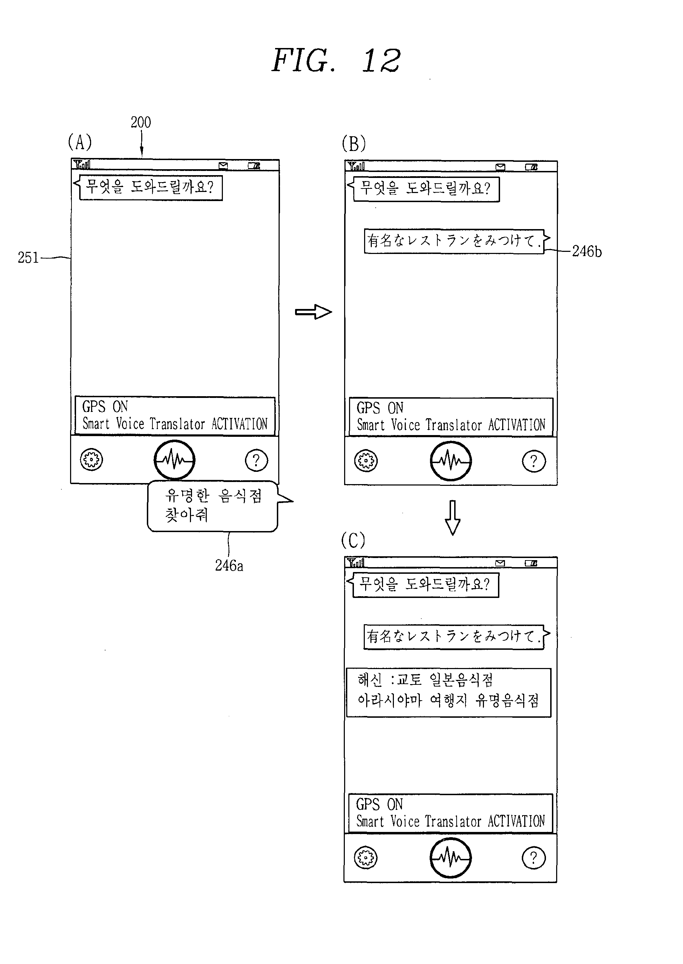

FIGS. 12A to 13C are diagrams for describing the locational information that is realized in the mobile terminal according to the embodiment of the present invention.

First, FIGS. 12A to 12C are diagrams for describing use of a search engine that searches for information according to the voice input according to the embodiment.

The mobile terminal further includes a location information module that is configured in a manner that obtains the locational information on the mobile terminal. When the location information module is activated, the locational information on the mobile terminal is obtained. When executing the second control, the controller executes control in such a way that a language used in a region associated with the locational information that is obtained in the locational information is selected as the second language. Accordingly, the information relating to the contents that are input in the first language is output in the language used in the region associated with the locational information that is obtained in the location information module.

Referring to FIG. 12A, the search engine is activated that searches for information according the voice input. As illustrated, on the display unit 251, the location information module of the mobile terminal is activated (GPS ON), and the execution of the second control that converts into the second language the first language in which the voice is input and conducts the information search is selected (Smart Voice Translator ACTIVATION).

When the voice for conducting the information search is input in the first language 246a (Korean), the controller sets the language that is used in the region associated with the locational information which is obtained in the location information module, to the second language 246b, and executed the second control. For example, if the mobile terminal is in Korea, the language that is used in the region associated with the locational information is defined as Korea, and if the mobile terminal is in Japan, the language that is used in the region associated with the locational information is defined as Japanese.

Referring to FIG. 12B, in the mobile terminal, the controller executes control in such a way that with the execution of the second control, the voice that is input in the first language 246a (Korean) is converted into the second language 246b (Japanese) and the information search is conducted. FIG. 12B illustrates an example in which the mobile terminal is in Japan. In FIG. 12B, the search is conducted in Japanese, the second language 246b.

A language that is suitable for features of the nation or the region, as well as a standard language, may be selected as the second language that is selected based on the locational information that is obtained in the location information module. For example, because the same language may have different dialects according to regions, the standard language and its dialect are both selected as the second language according to the locational information.

Alternatively, because the same language may have words that are different in pronunciation according to regions, a language including pronunciation-different words that are used in the related region is selected as the second language, according to the locational information that is obtained in the location information module. For example, an English word may have American pronunciation and British pronunciation that are different from each other. If the locational information on the mobile terminal that is obtained in the location information module corresponds to the U.S.A, the American language reflecting the American pronunciation is selected as the second language. If the locational information on the mobile terminal that is obtained in the location information module corresponds to the United Kingdom, the British language reflecting the British pronunciation is selected as the second language.

The result of the information search that is conducted in the second language is output in one among the first language and the second language. FIG. 12C illustrates that the information search is conducted in the second language and the result of the search is converted back into Korean, the first language and is output. Otherwise, the result of the search may be output in the second language.

Therefore, when the user of the mobile terminal stays in a foreign country, not in his/her mother country, although he/she inputs the search word in his/her mother language, the information search is conducted in the local language and the result of the search is output in one among the language used in the country where he/she stays and his/her mother language. Accordingly, there is an advantage in that the user of the mobile terminal who stay in a foreign country can obtain local information on the foreign country in a more precise and wide manner.

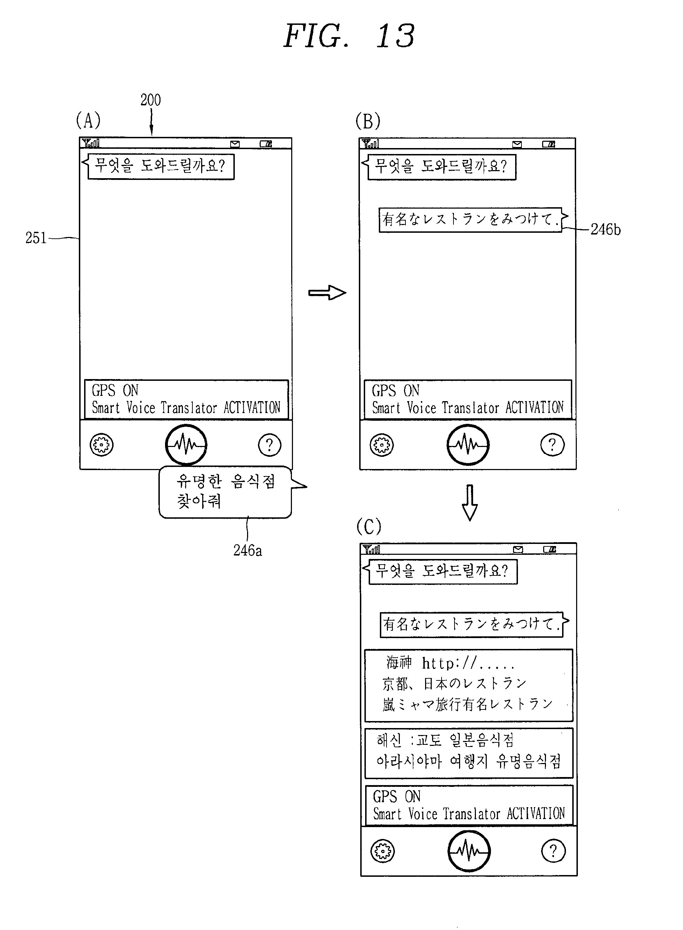

Likewise, FIGS. 13A to 13C are diagrams for describing use of the search engine that searches for information according to the voice input according to the embodiment.

Results of searches in FIGS. 13A and 13B are the same as those described referring to FIGS. 12A and 12B. However, referring to FIG. 13C, a result of inputting the search word in the first language 247a (Korean) and conducting the information search in the second language 247b (Japanese) is output both in the first language 274a and the second language 247b.

In such a case, when the touch is applied to one among the results of the search, a link connection to a Web site associated with the touched-on contents is established. Alternatively, when the touch input is applied to one among the results of the search, the touched-on result of the search is enlarged, and thus the related contents are output in more detail than before the touch input is applied.

The search according to an embodiment of the present invention is described below referring to FIGS. 14A to 14D.

FIGS. 14A to 14D are diagrams for describing the search that is realized according to an embodiment of the present invention.

FIG. 14A illustrates that an application by which the user transmits and receives a message to and from the user of the different mobile terminal is executed and a message received from the other party is output. When the touch input is applied to the touch input unit 230, the selection window from which to select which of the text input and the voice input is set to the first-language input manner is output.

Referring to FIG. 14B, the selection window from which to select the first-language input manner is output, and when one among the text input and the voice input is selected as the first-language input manner, the text input window or the voice input window is output.

FIG. 14B illustrates that the voice input is selected as the first-language input manner. The execution of the second control that searches for information according to the selection from the selection window is selected, and the second control may be executed independently and may be executed along with the first control.

FIG. 14C illustrates that the search word is input in the first language (Korean). The controller executes the first control and the second control at the same time, and the search word that is input in the first language is searched for both in the first language (Korean) and in the second language (Japanese).

The second language is selected from among a language in which a message is received from the other party, a language associated with contents received from the other party, a language associated with the locational information on the other party, and the like. In the drawing, a language (Japanese) associated with the contents received from the other party is selected as the second language.

Referring to FIG. 14D, at least one set of contents is output, among a set of contents that are input in the first language, contents that are converted from the first language to the second language, and a set of contents associated with results of the search engine conducting a search in the first language and the second language, respectively. Particularly, the contents associated with the results of the search engine conducting a search in the first language and the second language, respectively, are configured in a manner that with the touch input, is link-connected to a related Web site.

According to the present invention, it is not necessary to convert input words into another language using a separate translation program. Thus, it is possible to convert the input word and the contents, in a quick, intuitive manner, into a language on that is selected based on various selection conditions. Furthermore, the input word and the contents are converted into a language that is suitable for the user's needs.

According to the present invention with the configurations described above, a result associated with contents that are input in the first language is output in one among the first language and the second language, and thus the user of the mobile terminal can overcome a language barrier and can communicate with the other party or conduct the information search.

In addition, according to the present invention, the selection of the second language is made based on various selection conditions, and thus a language that is suitable for the user's needs is selected as the second language.

In addition, according to the present invention, the convenience of the user of the mobile terminal is remarkably increased.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100, 200) comprising:
a display unit (151, 251);
an input unit (130, 230) to receive a text or a voice in a first language; and
a controller (180) to output to the display unit (151, 251), information relating to content input in the first language and to execute at least one of first control and second control when outputting the information,
wherein the first control controls the display unit (151, 251) to output the information in the first language, and
wherein the second control converts the information in the first language into a second language that is different from the first language and controls the display unit (151, 251) to output the information in the second language.

2. The mobile terminal (100, 200) of claim 1,
wherein the first control is set to be executed by default, and
in response to selection of the second control based on a touch input, the second control is to be executed.

3. The mobile terminal (100, 200) of claim 2,
wherein in response to selection of the second control based on the touch input, the controller (180) to control the display unit (151, 251) to display a selection window (260), the selection window (261) to select which of a text input (261) and a voice input (262) is set to a first-language selection manner.

4. The mobile terminal (100, 200) of claim 3,
wherein in response to a touch input at the selection window (260), the display unit (151, 251) displays a text input window (261') or a voice input window (262').

5. The mobile terminal (100, 200) of any one of claims 1 to 4,
wherein the information relating to content input in the first language (241a, 242a) is converted to the second language based on a predetermined condition, and the information relating to the content is output, at the display unit (151, 251), in the second language (241b, 242b).

6. The mobile terminal (100, 200) of claim 5,
wherein when a total number of the second languages based on the predetermined condition is 2 or greater, the display unit (151, 251) displays a screen to select one of the second languages.

7. The mobile terminal (100, 200) of any one of claims 1 to 6,
wherein when wireless communication is performed with another party having contact information stored in an address book of the mobile terminal (100, 200), the controller (180) selects a language suitable for the another party and sets the selected language to the second language.

8. The mobile terminal (100, 200) of any one of claims 1 to 6,
wherein the display unit (151, 251) displays a language selection window (272') to select the second language based on an touch input, and
wherein the information is output in a language selected based on the touch input to the language selection window (272').

9. The mobile terminal (100, 200) of claim 8,
wherein a total number of the second languages displayed at the language selection window (272') is determined based on a frequency that a language is used on the mobile terminal (100, 200).

10. The mobile terminal (100, 200) of any one of claims 1 to 9,
wherein when despite selecting execution of the second control, the information is displayed, on the display unit (151, 251), in the first language (243a), and the second language (243b) is set based on the text (243c) additionally displayed at the display unit (151, 251) or based on the voice output from the audio output module (153, 153a, 153b).

11. The mobile terminal (100, 200) of claim 1,
wherein the input unit (130, 230) on a screen of a Web browser (280) is to receive a search word in the first language (244a), and
in response to a control command (281), an information search is performed using the Web browser (280), and a result of the search is output, at the display unit (151, 152), in the second language (244b).

12. The mobile terminal (100, 200) of claim 11,
wherein when the second control is executed, the result of the search is output in a language (244c) associated with the screen of the Web browser (280).

13. The mobile terminal (100, 200) of any one of claims 11 to 12,
wherein a result of the search in the first language (245a) and a result of the search in the second language (245b) are output to different screens of the Web browser (281, 282), respectively.

14. The mobile terminal (100, 200) of claim 11,
wherein the result of the search in the second language (244b) is converted back to the first language (244a) and is output at the display unit (151, 251).

15. The mobile terminal (100, 200) of claim 1, further comprising:
a location information module (153) to obtain locational information of the mobile terminal (100, 200),
wherein the information is output in a language (246b) used in a region associated with the obtained locational information.
